# EUROPEAN PATENT SPECIFICATION

(11) **EP 4 167 365 B1**
(45) Date of publication and mention of the grant of the patent: **15.10.2025**
(21) Application number: 22749996.9
(22) Date of filing: 28.01.2022
(51) Int. Cl.: H01M 50/251, H01M 50/211, H01M 50/30, H01M 50/24, H01M 50/502, H01M 10/48, H01M 10/42, A62C 3/16, A62C 37/38, A62C 99/00, H01M 50/209, H01M 50/296, H01M 50/507

(54) **BATTERY MODULE HAVING A GAS-BASED FIRE EXTINGUISHING AGENT GUIDE BLADE FOR EXTINGUISHING BATTERY CELL UNIT, AND BATTERY RACK AND ENERGY STORAGE SYSTEM INCLUDING THE BATTERY MODULE**
BATTERIEMODUL MIT EINER GASBASIERTEN FEUERLÖSCHMITTEL-LEITSCHAUFEL ZUM LÖSCHEN EINER BATTERIEZELLENEIHEIT, UND BATTERIE-RACK UND ENERGIESPEICHERSYSTEM MIT DEM BATTERIEMODUL
MODULE DE BATTERIE COMPORTANT UNE LAME DE GUIDAGE D'AGENT D'EXTINCTION D'INCENDIE À BASE DE GAZ POUR ÉTEINDRE UNE UNITÉ D'ÉLÉMENT DE BATTERIE, ET UN BÂTI DE BATTERIE ET UN SYSTÈME DE STOCKAGE D'ÉNERGIE COMPRENANT LE MODULE DE BATTERIE

(30) Priority: 02.02.2021 KR 20210015018
(43) Date of publication of application: 19.04.2023
(73) Proprietor: LG Energy Solution, Ltd., Seoul 07335 (KR)
(72) Inventor: PARK, Hong-Jae, Daejeon 34122 (KR); KIM, Yo-Hwan, Daejeon 34122 (KR); CHO, Tae-Shin, Daejeon 34122 (KR)
(74) Representative: Hoffmann Eitle
(86) International application number: PCT/KR2022/001640
(87) International publication number: WO 2022/169247

(56) References cited:
- EP-B1- 3 333 932
- JP-A- 2013 037 873
- JP-A- 2013 037 873
- KR-A- 20130 043 154
- KR-A- 20190 064 887
- KR-A- 20210 004 189
- KR-B1- 102 154 314
- US-A1- 2005 174 092
- US-A1- 2019 351 268

## Description

### TECHNICAL FIELD

The present disclosure relates to a battery module, and more particularly, to a battery module capable of effectively injecting a gas-based fire extinguishing agent into a specific battery cell in which an event occurs from among a plurality of battery cells, and a battery rack or an energy storage system including the battery module.

### BACKGROUND ART

Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage per unit battery cell ranges from about 2.5 V to about 4.5 V. When higher output voltage and energy capacity are required, a battery module is configured by connecting a plurality of battery cells in series and in parallel. Also, a battery pack or a battery rack is configured by connecting the battery modules in series and/or in parallel.

Because a secondary battery is accompanied by a chemical reaction during charging/discharging, the performance of the secondary battery may be degraded when the secondary battery is used in an environment higher than an appropriate temperature, and there is a risk of fire or explosion when a temperature rises significantly above the appropriate temperature. In particular, in the case of a battery module having a structure in which a large number of secondary batteries are intensively accommodated, thermal runaway in which heat from one secondary battery spreads to other surrounding secondary batteries may easily occur due to the structure. For this reason, a cooling system and a fire extinguishing system are usually included when a battery module and a battery pack are configured.

In the art, a water injection method of injecting water into a battery pack or a battery module is commonly used as a fire extinguishing system. However, when water is injected into the battery module in order to put out a fire of one specific battery cell, the remaining battery cells will inevitably be damaged by flooding and may not be reused.

Accordingly, there is a demand for a method of applying a halogen compound gas-based extinguishing agent suitable for an electric fire and having less damage than water after fire extinguishing to a fire of a battery module and effectively guiding the gas-based fire extinguishing agent to a specific battery cell in which an event occurs.

JP 2013 037873 A concerns a battery module including an exhaust path for discharging gas generated from the secondary batteries of the battery module.

US 2005/174092 A1 concerns a battery system including a structure that is configured to collect gas expelled from battery cells.

### DISCLOSURE

### Technical Problem

The present disclosure is designed to solve the problems of the related art, and therefore the present disclosure is directed to providing a battery module capable of, when an event (gas venting or fire) occurs in a specific battery cell in a battery module, intensively guiding a fire extinguishing agent to the specific battery cell without being introduced into other battery cells.

### Technical Solution

A battery module according to the present invention is defined in claim 1 and includes: a cell assembly including battery cells arranged to face each other in one direction; a bus bar assembly coupled to a side surface of the cell assembly on which electrode leads of the battery cells are located; and guide blades arranged in front of the bus bar assembly in a direction corresponding to an arrangement direction of the battery cells, wherein each of the guide blades has a plate surface facing at least one battery cell, and is coupled to the bus bar assembly to, when gas is generated in at least one battery cell, rotate by a certain angle due to gas pressure.

The battery module further includes a module case in which the cell assembly and the bus bar assembly are integrally accommodated, wherein the module case includes, on a side thereof, a fire extinguishing agent injection valve configured to inject a fire extinguishing agent into the module case, wherein an empty space into which the fire extinguishing agent is injected is formed between the guide blades and an inner wall of the module case facing the guide blades.

One guide blade may be provided per battery cell.

Each battery cell may be a pouch-type battery cell with a gas venting guide portion on a side thereof, wherein each guide blade is provided at a position facing the gas venting guide portion of each battery cell.

Each guide blade may include: a guide plate portion provided as a plate-like body capable of shielding a front portion of the gas venting guide portion; and a hinge shaft portion protruding from an upper end and a lower end of the guide plate portion and inserted into an insertion hole formed in the bus bar assembly.

Each guide blade may be coupled to the bus bar assembly so that the guide plate portion is normally parallel to the side surface of the cell assembly.

The hinge shaft portion may include: a shaft vertically passing through the insertion hole; and a latch horizontally protruding from an outer circumferential surface of the shaft, wherein the bus bar assembly includes a stopper that is provided within a radius of rotation of the latch to contact the latch when the latch rotates and is configured to limit a rotation angle of the latch.

The latch may include a convex portion having an arc shape on a surface thereof, and the stopper may include a concave portion having a concave shape conforming to the convex portion.

At least one of the convex portion and the concave portion may be magnetic.

The bus bar assembly may include a bus bar frame including: a body portion including slits through which the electrode leads pass and facing the side surface of the cell assembly; an upper plate portion protruding forward from an upper end of the body portion; and a lower plate portion protruding forward from a lower end of the body portion, and a plurality of bus bars mounted on the body portion and connected in a pre-determined pattern to the electrode leads, wherein an upper end and a lower end of each guide blade are respectively hinged to the upper plate portion and the lower plate portion.

According to another aspect of the present invention, a battery rack, which is defined in claim 10, includes: a rack housing; the plurality of battery modules arranged in layers in the rack housing; a fire extinguishing agent tank located inside the rack housing or around the rack housing; a pipe connecting the fire extinguishing agent tank to each of the plurality of battery modules; at least one sensor provided in the rack housing and configured to detect whether gas is generated in each of the battery modules; and a controller configured to generate a control signal for, when it is detected by the sensor that gas is generated in a battery module of the plurality of battery modules, guiding a fire extinguishing agent to the battery module through the pipe.

The fire extinguishing agent may be a halogen compound fire extinguishing agent.

According to still another aspect of the present invention, an energy storage system, which is defined in claim 12, includes the one or more battery racks.

### Advantageous Effects

According to an aspect of the present invention, there is provided a battery module capable of, when an event (gas venting or fire) occurs in a specific battery cell in a battery module, intensively guiding a fire extinguishing agent to the specific battery cell without being introduced into other battery cells.

For example, when an event occurs in a specific battery cell in a battery module, only a guide blade covering the specific battery cell is opened, and thus, a gas-based fire extinguishing agent may be guided into a target battery cell, and may not be introduced into other battery cells or its influence may be minimized. According to the present disclosure, a fire of a specific battery cell and thermal runaway to surrounding battery cells may be easily prevented by injecting a gas-based fire extinguishing agent, and even when the gas-based fire extinguishing agent is injected into a battery module, battery cells other than the specific battery cell may be reused.

### DESCRIPTION OF DRAWINGS

FIG. 1 is a perspective view illustrating a battery rack according to an embodiment of the present disclosure.
FIG. 2 is a reference view for describing a fire extinguishing system of the battery rack of FIG. 1.
FIG. 3 is a view illustrating a configuration of a battery module according to an embodiment of the present disclosure.
FIG. 4 is a perspective view illustrating a cell assembly to which a guide blade is coupled according to an embodiment of the present disclosure.
FIG. 5 is a partial exploded perspective view illustrating a cell assembly according to an embodiment of the present disclosure.
FIG. 6 is a perspective view illustrating an operation of a guide blade when an event occurs in a specific battery cell.
FIG. 7 is a partial enlarged view of FIG. 6.
FIG. 8 is a view corresponding to FIG. 7 according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto within the scope of the appended claims.

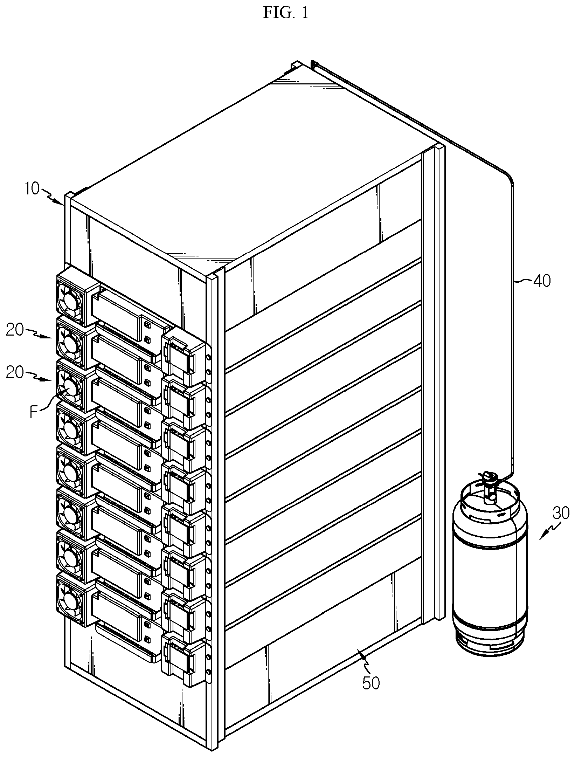

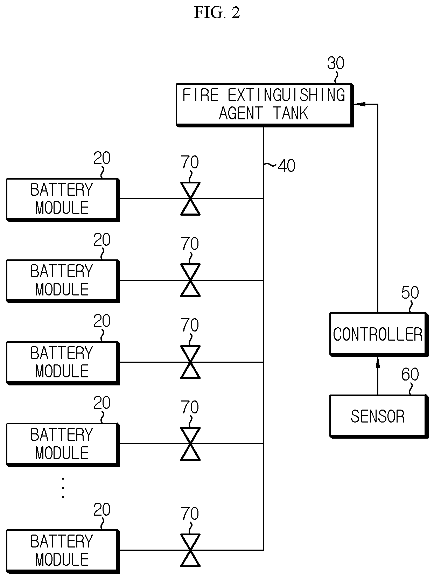

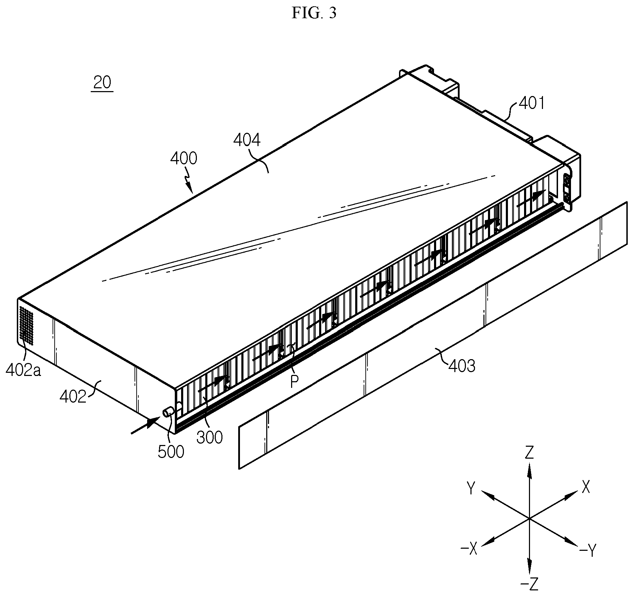

FIG. 1 is a perspective view illustrating a battery rack according to an embodiment of the present disclosure. FIG. 2 is a reference view for describing a fire extinguishing system of the battery rack of FIG. 1. FIG. 3 is a view illustrating a configuration of a battery module according to an embodiment of the present disclosure.

Referring to FIG. 1, a battery rack according to an embodiment of the present disclosure includes a rack housing 10 and a plurality of battery modules 20.

The rack housing 10 may include a plurality of frames, and may be configured so that a plurality of battery modules 20 and a controller 50 are mounted in the rack housing 10.

The plurality of battery modules 20 are located in layers in the rack housing 10. For example, because the battery modules 20 are accommodated in the rack housing 10 as shown in FIG. 1, space utilization of the battery rack, electrical connection convenience, and energy density may be improved.

Each battery module 20 includes a blower fan F for introducing external air into the battery module 20 as a cooling device. When the blower fan F operates, external air may be introduced into the battery module 20 through an air inlet provided in a left portion of a front surface of the battery module 20 and may flow through cooling channels provided in the cell assembly 100 described below in a +Y axis direction to cool the battery cell 110. The air passing through the cooling channels may be discharged through an air outlet 402a of a rear plate 402 provided on a rear surface of a module case 400 to the outside of the battery module 20.

Due to a structure of the battery rack, when a fire occurs in one battery module 20, flames spread rapidly to other battery modules 20, and there is a risk of fire spread and explosion. Accordingly, it is very important to find the battery module 20 in which the fire first occurs and rapidly extinguish the fire.

Accordingly, the battery rack according to the present disclosure includes a fire extinguishing system including a fire extinguishing agent tank 30, a pipe 40, the controller 50, and a sensor 60.

As shown in FIG. 1, the fire extinguishing agent tank 30 may be located around the rack housing 10, and is connected through the pipe 40 to each battery module20. Although not shown in detail for convenience of illustration, a portion of the pipe 40 connected to the battery rack may be connected in a manifold type to each battery module 20.

The fire extinguishing agent tank 30 contains a halogen compound fire extinguishing agent. Examples of the halogen compound fire extinguishing agent may include FK-5112 and HFCs-based fire extinguishing agents which are commercially available. The FK-5112 fire extinguishing agent extinguishes a fire by using cooling/asphyxlating fire extinguishing method, and the HFCs-based fire extinguishing agent extinguishes a fire by using a cooling/anti-catalytic fire extinguishing method. These halogen compound fire extinguishing agents are electrically insulating and may minimize additional secondary damage (electrical explosion, shutdown, etc.).

A fire extinguishing system of a battery rack according to the present disclosure will be briefly described with reference to FIG. 2 as follows.

The controller 50 of the battery rack according to the present disclosure may have a function as a battery management system (BMS) for managing charging/discharging of the battery modules 20, is connected to the sensor 60 and the fire extinguishing agent tank 30, and is configured to output a control signal for controlling an operation of the fire extinguishing agent tank 30.

The controller 50 monitors gas generation or temperature of all of the battery modules 20. When gas is detected or an abnormal high temperature is detected in a specific battery module 20, the controller outputs an operation signal to the fire extinguishing agent tank 30. For gas or temperature detection of the battery module 20, a plurality of sensors 60 may be provided inside and outside each battery module 20. The sensor 60 detects a rise in temperature and/or ejection of gas of the battery module 20 and transmits a detection signal to the controller 50. For example, the sensor 60 may be a temperature sensor 60, a gas detection sensor 60, or a combination of the temperature sensor 60 and the gas detection sensor 60.

An on/off valve may be provided between the pipe 40 and a fire extinguishing agent injection valve 500 of each battery module 20. The on/off valve may allow a fire extinguishing agent to be supplied or blocked to or from each battery module 20. For example, when gas is generated in a specific battery module 20 from among the plurality of battery modules 20, a control valve 70 connected to the specific battery module 20 may be opened under the control of the controller 50, to inject a fire extinguishing agent into the specific battery module 20.

Next, the battery module 20 according to an embodiment of the present disclosure will be described in detail with reference to FIGS. 3 through 7.

The battery module 20 includes a cell assembly 100, a bus bar assembly 200, guide blades 300, the module case 400, and the fire extinguishing agent injection valve 500.

A plurality of cell assemblies 100 may be provided, and may be accommodated in the module case 400 as shown in FIG. 3. Each of the cell assemblies 100 may include battery cells 110 arranged to face each other in one direction (X axis direction) and cartridges 120 supporting the battery cells 110.

The battery cells 110 are a pouch-type secondary battery in which an electrode assembly (not shown) and an electrolytic solution are sealed with a pouch sheet.

The pouch sheet may include an upper pouch sheet and a lower pouch sheet. The pouch-type secondary battery may be manufactured by locating the electrode assembly and the electrolytic solution at a central portion of the lower pouch sheet, covering the same with the upper pouch sheet, and sealing edges the upper and lower pouch sheets through thermal fusion. In this case, an electrode lead 111 may extend to the inside and the outside of the pouch sheet and a portion of the electrode lead 111 may be fixed between the edges of the upper pouch sheet and the lower pouch sheet through thermal fusion. The electrode lead 111 includes a positive electrode lead and a negative electrode lead and functions as an electrode terminal of the pouch-type secondary battery.

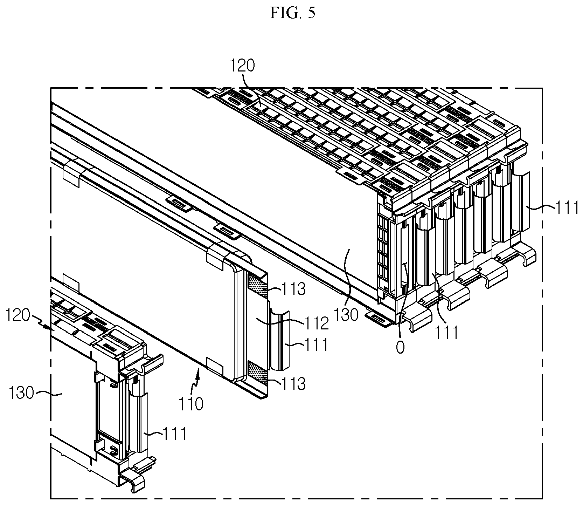

An edge portion of the pouch sheet subjected to thermal fusion is defined as a sealing portion 112. The pouch-type battery cell 110 of the present disclosure includes a gas venting guide portion 113 in the sealing portion 112 (see FIG. 5). The gas venting guide portion 113 that is a portion where the fusion strength of the pouch sheet is weaker than that of other portions is provided adjacent to the electrode 111. When gas is generated in the battery cell 110 and internal pressure is increased, the gas venting guide portion 113 in the sealing portion 112 may be first damaged and gas may leak therethrough.

The cartridge 120 is an injection molding product for stacking and packaging the battery cells 110. The cartridge 120 may include four frames forming a substantially quadrangular frame shape, and a cooling plate 130 may be attached to an inner space of the quadrangular frame.

Because one or two battery cells 110 are located between two cartridges 120 to which the cooling plate 130 is attached, the battery cell 110 may be fixedly accommodated by the two cartridges 120 with one or both surfaces in contact with the cooling plate 130. In this case, the cartridges 120 may be continuously assembled with each other with the battery cell 110 therebetween, and the electrode lead 111 of each battery cell 110 may be drown out of a gap between the assembled two cartridges 120.

The cooling plate 130 is a thin metal plate having high thermal conductivity such as aluminum, and has a hollow structure to provide a cooling channel through which a refrigerant may flow. When the cooling plate 130 is attached to the cartridge 120, the cooling channel may communicate with openings portion O passing through two frames (short sides) of the cartridge 120. In this configuration, external air may be introduced through the opening portion O on one side of the cartridge 120 into the cooling channel to cool the battery cell 110, and may be discharged through the opening portion on the opposite side of the cartridge 120 to the outside of the cartridge 120.

Although the cell assembly 100 according to the present embodiment includes the cartridges 120, without using the cartridges 120, the battery cells 110 may be directly stacked and may be fixed to the module case 400 through a thermally conductive adhesive or the like. Also, a cooling channel may be formed in an upper portion or a lower portion of the cell assembly 100, so that external air flows along an upper end or lower end edge of the battery cells 110. That is, the scope of the present disclosure is not limited to using the cartridge 120 when the cell assembly is configured.

The bus bar assembly 200 is an electrical component including a bus bar 220 and a bus bar frame 210, and is mounted on a side surface of the cell assembly 100. The side surface of the cell assembly 100 refers to a portion on which the electrode leads 111 of the battery cells 110 are located.

The bus bar frame 210 may include a body portion 211, an upper plate portion 212, and a lower plate portion 213.

The body portion 211 is a portion facing the side surface of the cell assembly 100, may be detached/attached from/to the cell assembly 100 in a snap-fit manner, may allow the bus bars 220 to be mounted on a front surface of the body portion 211, and may include slits (not shown) through which the electrode leads 111 may pass.

Although not shown in detail for convenience of illustration, the battery cells 110 may be connected in series and/or in parallel by connecting the electrode leads 111 in a pre-determined pattern to the bus bar 220. For example, positive electrode leads of one or two battery cells 110 are overlapped, pulled out to the front of the body portion 211 through the slits, bent, and welded to any one bus bar 220, and likewise, negative electrode leads of another one or two battery cells 110 are welded to the bus bar 220 to electrically connect the battery cells 110.

The upper plate portion 212 and the lower plate portion 213 are parts for assembling the guide blades 300, and the upper plate portion 212 may protrude forward from an upper end of the body portion 211 and the lower plate portion 213 may protrude forward from a lower end of the body portion 211.

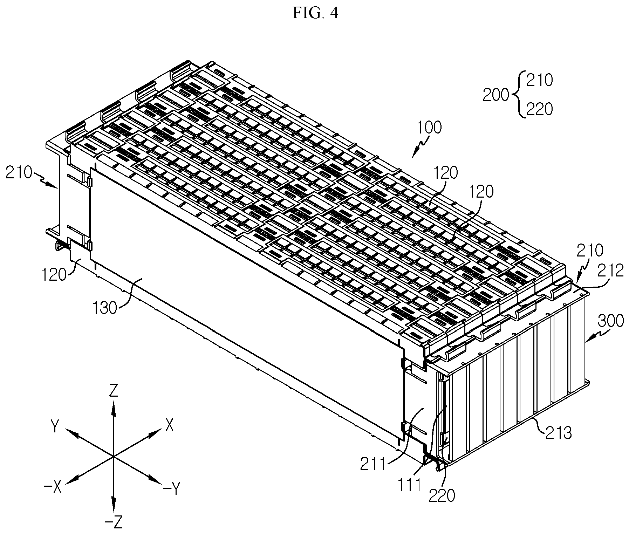

The guide blades 300 are configured to selectively guide a gas-based fire extinguishing agent to the battery cell 110 in which an event occurs from among the battery cells 110. As shown in FIG. 4, the guide blades 300 are arranged in front of the bus bar assembly 200 in a direction (±X axis direction) corresponding to an arrangement direction of the battery cells 110, and are configured so that each guide blade 300 has a plate surface facing at least one battery cell 110 and is hinged to the bus bar assembly 200 to, when gas is generated in at least one battery cell 110, rotate by a certain angle due to gas pressure.

It is preferable that one guide blade 300 is provided per battery cell 110. In this case, because, when an event occurs, one guide blade 300 is opened per target battery cell 110 and a gas-based fire extinguishing agent may be guided to the target battery cell 110, other surrounding battery cells 110 may be less affected by the gas-based fire extinguishing agent.

Also, the battery cells 110 of the present embodiment are bidirectional pouch-type battery cells 110 including positive and negative electrode leads located in opposite directions, and include the gas venting guide portion 113 only in one direction. Accordingly, when an event occurs, gas may be guided to a right side of the cell assembly 100. Accordingly, in the present embodiment, each guide blade 300 may be located at a position of each battery cell 110 facing the gas venting guide portion 113, that is, on the right side of the cell assembly 100, and may not be located on a left side of the cell assembly 100 where there is no gas venting guide portion 113.

However, unlike in the present embodiment, the cell assembly 100 may include the battery cells 110 without the gas venting guide portion 113, or due to other factors, the guide blades 300 may be applied to both sides of the cell assembly 100.

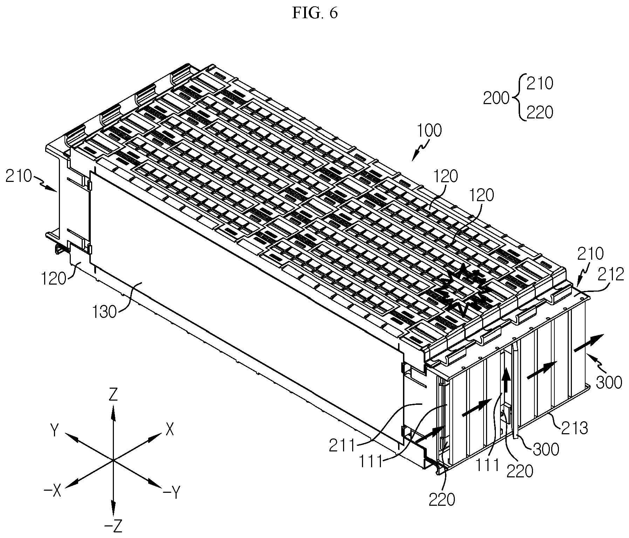

When the guide blades 300 are described in more detail with reference to FIGS. 6 through 8, each guide blade 300 may include a guide plate portion 310 and a hinge shaft portion 320.

The guide plate portion 310 may be provided as a plate-like body capable of shielding a front portion of a corresponding gas venting guide portion 113 (or connection portion between a bus bar and an electrode lead of a corresponding battery cell). The hinge shaft portion 320 that is a portion assembled to the bus bar frame 210 may be provided in a cylindrical shape protruding vertically from an upper end and a lower end of the guide plate portion 310.

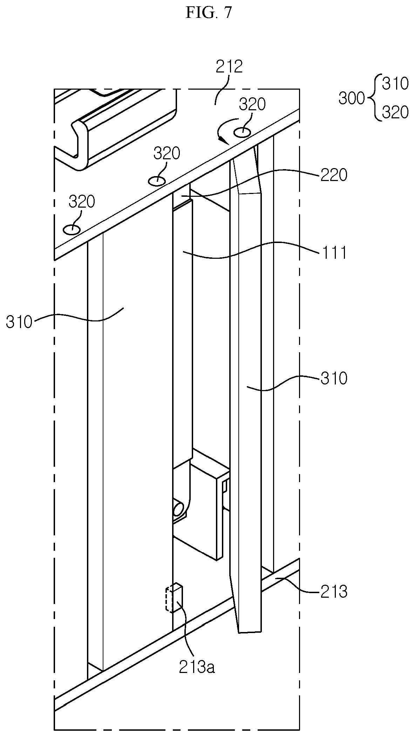

As shown in FIG. 7, an upper hinge shaft portion 320 may be inserted into an insertion hole formed in the upper plate portion 212 of the bus bar frame 210, and a lower hinge shaft portion (not shown) may be inserted into an insertion hole formed in the lower plate portion 213 of the bus bar frame 210. Accordingly, the guide plate portion 310 may rotate forward and backward about the hinge shaft portion 320.

Also, a fixing projection 213a for limiting rotation when the guide plate portion 310 reaches a position parallel to the side surface of the cell assembly 100 may be provided on the lower plate portion 213 of the bus bar frame 210. The fixing projection 213a is a magnetic body, and a magnetic body may be located at a portion of the guide plate portion 310 contacting the fixing projection 213a so that the guide plate portion 310 is normally in contact with the fixing projection 213a, that is, in a closed state.

In this configuration, the guide plate portion 310 is normally parallel to the side surface of the cell assembly 100, to shield the front portion of the gas venting guide portion 113 (or connection portion between the bus bar and the electrode lead of the corresponding battery cell).

However, as shown in FIG. 6, when gas is vented through a certain battery cell 110, the guide blade 300 facing the battery cell 110 rotates to be opened due to pressure of the gas during the venting. In the configuration of FIG. 3, because the fire extinguishing agent injection valve 500 is in a +X direction, a fire extinguishing agent ejected from the fire extinguishing agent injection valve 500 moves in the module case 400 in a direction indicated by an arrow of FIG. 6. In this case, the guide blade 300 facing a battery cell in which gas venting does not occur prevents a fire extinguishing agent from moving in a +Y direction, and the guide blade 300 facing a battery cell in which gas venting occurs is opened by a certain angle, changes a direction of a fire extinguishing agent, and guides the fire extinguishing agent to be injected into the specific battery cell in which the event occurs. That is, because the battery module 20 of the present disclosure is configured so that when gas is vented in a specific battery cell 110, only a specific guide blade 300 facing the specific battery cell 110 is opened, a fire extinguishing agent may be injected into the specific battery cell 110, that is, a target battery cell.

**In** another example, an angle by which the guide blade 300 is opened by gas pressure when an event occurs may be limited to a specific angle.

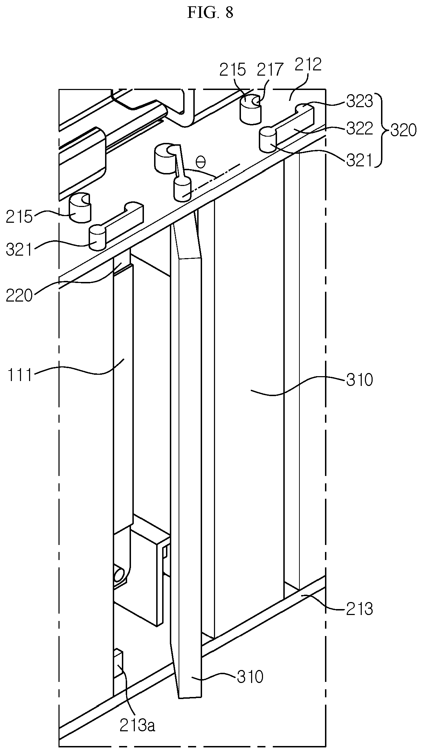

For example, as shown in FIG. 8., the hinge shaft portion 320 of the guide blade 300 according to another example includes a shaft 321 vertically passing through an insertion hole of the bus bar frame 210 and a latch 322 horizontally protruding from an outer circumferential surface of the shaft 321, and the bus bar assembly 200 may further include a stopper 215 that is within a radius of rotation of the latch when the latch 322 rotates and contacts the latch 322 at a position corresponding to the specific angle.

Also, the latch 322 may include a convex portion 323 having an arc shape on a surface thereof, the stopper 215 may include a concave portion 217 having a concave shape conforming to the convex portion 323, and at least one of the convex portion 323 and the concave portion 217 may be provided as a magnetic body.

**In** this configuration, the guide blade 300 may not be completely opened by gas pressure when an event occurs and an open state may be fixed at a specific angle. For example, the latch 322 of the guide blade 300 may be caught by the stopper 215 of the bus bar frame 210 to limit an opening angle, and the convex portion 323 of the latch 322 may be inserted into the concave portion 217 of the stopper 215 to maintain the opening angle while a gas-based fire extinguishing agent is injected into the target battery cell 110. It may be preferable that the opening angle is about 45° to easily inject the fire extinguishing agent.

The module case 400 includes a front plate 401 (see FIG. 3), the rear plate 402, a pair of side plates 403, a top plate 404, and a bottom plate (not shown), and may have a substantially rectangular parallelepiped shape to integrally accommodate a series of components including the cell assemblies 100.

In the present embodiment, an empty space P into which a fire extinguishing agent is injected is formed between the guide blades 300 and an inner wall of the module case 400 facing the guide blades 300, that is, the right side plate 403. When gas is detected in a specific battery cell 110, a fire extinguishing agent may be injected into the module case 400 through the fire extinguishing agent injection valve 500 provided on a right side of the rear plate 402. The fire extinguishing agent may flow from the back to the front of the module case 400 in the empty space P (in X-axis direction) and the flow of the fire extinguishing agent may be guided through the guide blade 300 to the specific battery cell 110.

According to the configuration of the battery module 20 according to an embodiment of the present disclosure as described above, when an event occurs in a specific battery cell, only the guide blade 300 covering the specific battery cell 110 may be opened, and thus, a gas-based fire extinguishing agent may be guided to the specific battery cell 110, that is, a target battery cell 110, and may not be introduced into other battery cells 110 or its influence may be reduced. Accordingly, even when the gas-based fire extinguishing agent is injected into the battery module 20, battery cells other than the specific battery cell 110 may be reused.

An energy storage system according to the present disclosure includes one or more battery racks including the battery modules 20.

The storage energy system may further include a master battery management system (not shown) for integrally controlling the battery modules 20 and the battery racks.

While one or more embodiments of the present disclosure have been described with reference to the embodiments and figures, the present disclosure is not limited thereto, and it will be understood by one of ordinary skill in the art that various changes in form and details may be made therein within the scope of the following claims.

It will be understood by one of ordinary skill in the art that when terms indicating directions such as upper, lower, left, right, front, and rear are used, these terms are only for convenience of explanation and may vary according to a position of an target object, a position of an observer, etc.

## Claims

1. A battery module comprising:
a cell assembly (100) comprising battery cells (110) arranged to face each other in one direction;
a bus bar assembly (200) coupled to a side surface of the cell assembly (100) on which electrode leads of the battery cells (110) are located; and
guide blades (300) arranged in front of the bus bar assembly (200) in a direction corresponding to an arrangement direction of the battery cells (110),
wherein each of the guide blades (300) has a plate surface facing at least one battery cell (110), and is coupled to the bus bar assembly (200) to, when gas is generated in at least one battery cell (110), rotate by a certain angle due to gas pressure,
wherein the battery module further comprises a module case (400) in which the cell assembly (100) and the bus bar assembly (200) are integrally accommodated,
wherein the module case (400) comprises, on a side thereof, a fire extinguishing agent injection valve (500) configured to inject a fire extinguishing agent into the module case (400),
wherein an empty space (P) into which the fire extinguishing agent is injected is formed between the guide blades (300) and an inner wall of the module case (400) facing the guide blades (300).

2. The battery module (20) according to claim 1, wherein one guide blade (300) is provided per battery cell (110).

3. The battery module (20) according to claim 1, wherein each battery cell (110) is a pouch-type battery cell with a gas venting guide portion (113) on a side thereof,
wherein each guide blade (300) is provided at a position facing the gas venting guide portion (113) of each battery cell (110).

4. The battery module (20) according to claim 3, wherein each guide blade (300) comprises:
a guide plate portion (310) provided as a plate-like body capable of shielding a front portion of the gas venting guide portion (113); and
a hinge shaft portion (320) protruding from an upper end and a lower end of the guide plate portion (310) and inserted into an insertion hole formed in the bus bar assembly (200).

5. The battery module (20) according to claim 4, wherein each guide blade (300) is coupled to the bus bar assembly (200) so that the guide plate portion (310) is normally parallel to the side surface of the cell assembly (100).

6. The battery module (20) according to claim 4, wherein the hinge shaft portion (320) comprises:
a shaft (321) vertically passing through the insertion hole; and
a latch (322) horizontally protruding from an outer circumferential surface of the shaft (321),
wherein the bus bar assembly (200) comprises a stopper (215) that is provided within a radius of rotation of the latch (322) to contact the latch (322) when the latch (322) rotates and is configured to limit a rotation angle of the latch (322).

7. The battery module (20) according to claim 6, wherein the latch (322) comprises a convex portion (323) having an arc shape on a surface thereof, and
the stopper (215) comprises a concave portion (217) having a concave shape conforming to the convex portion (323).

8. The battery module (20) according to claim 7, wherein at least one of the convex portion (323) and the concave portion (217) is magnetic.

9. The battery module (20) according to claim 1, wherein the bus bar assembly (200) comprises
a bus bar frame (210) comprising: a body portion (211) comprising slits through which the electrode leads (111) pass and facing the side surface of the cell assembly (100); an upper plate portion (212) protruding forward from an upper end of the body portion (211); and a lower plate portion (213) protruding forward from a lower end of the body portion (211), and
a plurality of bus bars (220) mounted on the body portion (211) and connected in a pre-determined pattern to the electrode leads (111),
wherein an upper end and a lower end of each guide blade (300) are respectively hinged to the upper plate portion (212) and the lower plate portion (213).

10. A battery rack comprising:
a rack housing (10);
a plurality of battery modules (20) according to any one of claims 1 through 9 arranged in layers in the rack housing (10);
a fire extinguishing agent tank (30) located inside the rack housing (10) or around the rack housing (10);
a pipe (40) connecting the fire extinguishing agent tank (30) to each of the plurality of battery modules (20);
at least one sensor (60) provided in the rack housing (10) and configured to detect whether gas is generated in each of the battery modules (20); and
a controller (50) configured to generate a control signal for, when it is detected by the sensor (60) that gas is generated in a battery module (20) of the plurality of battery modules (20), guiding a fire extinguishing agent to the battery module (20) through the pipe (40).

11. The battery rack according to claim 10, wherein the fire extinguishing agent is a halogen compound fire extinguishing agent.

12. An energy storage system comprising one or more battery racks according to claim 10.

## Patentansprüche

1. Batteriemodul, umfassend:
eine Zellenanordnung (100), umfassend Batteriezellen (110), die angeordnet sind, um in einer Richtung einander zugewandt zu sein;
eine Sammelschienenanordnung (200), die mit einer Seitenoberfläche der Zellenanordnung (100) gekoppelt ist, auf der sich die Elektrodenanschlüsse der Batteriezellen (110) befinden; und
Leitschaufeln (300), die vor der Sammelschienenanordnung (200) in einer Richtung angeordnet sind, die einer Anordnungsrichtung der Batteriezellen (110) entspricht,
wobei jede der Leitschaufeln (300) eine Plattenoberfläche aufweist, die mindestens einer Batteriezelle (110) zugewandt ist, und mit der Sammelschienenanordnung (200) gekoppelt ist, um sich, wenn in mindestens einer Batteriezelle (110) Gas erzeugt wird, aufgrund des Gasdrucks um einen bestimmten Winkel zu drehen,
wobei das Batteriemodul weiter ein Modulgehäuse (400) umfasst, in dem die Zellenanordnung (100) und die Sammelschienenanordnung (200) integral untergebracht sind,
wobei das Modulgehäuse (400) auf einer Seite davon ein Feuerlöschmittel-Einspritzventil (500) umfasst, das dazu konfiguriert ist, ein Feuerlöschmittel in das Modulgehäuse (400) einzuspritzen,
wobei ein leerer Raum (P), in den das Feuerlöschmittel eingespritzt wird, zwischen den Leitschaufeln (300) und einer Innenwand des Modulgehäuses (400), die den Leitschaufeln (300) zugewandt ist, gebildet ist.

2. Batteriemodul (20) nach Anspruch 1, wobei pro Batteriezelle (110) eine Leitschaufel (300) bereitgestellt ist.

3. Batteriemodul (20) nach Anspruch 1, wobei jede Batteriezelle (110) eine Batteriezelle vom Beuteltyp mit einem Gasentlüftungsführungsabschnitt (113) auf einer Seite davon ist,
wobei jede Leitschaufel (300) an einer Position, die dem Gasentlüftungsführungsabschnitt (113) jeder Batteriezelle (110) zugewandt ist, bereitgestellt ist.

4. Batteriemodul (20) nach Anspruch 3, wobei jede Leitschaufel (300) umfasst:
einen Leitschaufelabschnitt (310), der als Schaufel-artiger Körper bereitgestellt ist, der in der Lage ist, einen vorderen Abschnitt des Gasentlüftungsführungsabschnitts (113) abzuschirmen; und
einen Drehgelenkwellenabschnitt (320), der aus einem oberen Ende und einem unteren Ende des Leitschaufelabschnitts (310) herausragt und in ein in der Sammelschienenanordnung (200) gebildetes Einführloch eingeführt ist.

5. Batteriemodul (20) nach Anspruch 4, wobei jede Leitschaufel (300) mit der Sammelschienenanordnung (200) gekoppelt ist, sodass der Leitschaufelabschnitt (310) normalerweise parallel zur Seitenoberfläche der Zellenanordnung (100) ist.

6. Batteriemodul (20) nach Anspruch 4, wobei der Drehgelenkwellenabschnitt (320) umfasst:
eine Welle (321), die vertikal durch das Einführloch hindurchgeht; und
eine Sperrklinke (322), die horizontal aus einer Außenumfangsoberfläche der Welle (321) herausragt,
wobei die Sammelschienenanordnung (200) einen Anschlag (215) umfasst, der innerhalb eines Drehradius der Sperrklinke (322) bereitgestellt ist, um die Sperrklinke (322) zu berühren, wenn sich die Sperrklinke (322) dreht, und der dazu konfiguriert ist, einen Drehwinkel der Sperrklinke (322) zu begrenzen.

7. Batteriemodul (20) nach Anspruch 6, wobei die Sperrklinke (322) einen konvexen Abschnitt (323) umfasst, der auf einer Oberfläche davon eine Bogenform aufweist, und
der Anschlag (215) einen konkaven Abschnitt (217) umfasst, der eine konkave Form aufweist, die dem konvexen Abschnitt (323) entspricht.

8. Batteriemodul (20) nach Anspruch 7, wobei mindestens einer von dem konvexen Abschnitt (323) und dem konkaven Abschnitt (217) magnetisch ist.

9. Batteriemodul (20) nach Anspruch 1, wobei die Sammelschienenanordnung (200) Folgendes umfasst
einen Sammelschienenrahmen (210), umfassend: einen Körperabschnitt (211), der Schlitze umfasst, durch die die Elektrodenanschlüsse (111) hindurchgehen und die der Seitenoberfläche der Zellenanordnung (100) zugewandt sind; einen oberen Plattenabschnitt (212), der aus einem oberen Ende des Körperabschnitts (211) nach vorne herausragt; und einen unteren Plattenabschnitt (213), der aus einem unteren Ende des Körperabschnitts (211) nach vorne herausragt, und
eine Vielzahl von Sammelschienen (220), die am Körperabschnitt (211) montiert und in einem vorbestimmten Muster mit den Elektrodenanschlüssen (111) verbunden sind,
wobei ein oberes Ende und ein unteres Ende jeder Leitschaufel (300) jeweils an dem oberen Plattenabschnitt (212) und dem unteren Plattenabschnitt (213) angelenkt sind.

10. Batterie-Rack, umfassend:
ein Gestellgehäuse (10);
eine Vielzahl von Batteriemodulen (20) nach einem der Ansprüche 1 bis 9, die in Schichten im Gestellgehäuse (10) angeordnet sind;
einen Feuerlöschmitteltank (30), der sich im Inneren des Gestellgehäuses (10) oder um das Gestellgehäuse (10) herum befindet;
ein Rohr (40), das den Feuerlöschmitteltank (30) mit jedem der Vielzahl von Batteriemodulen (20) verbindet;
mindestens einen Sensor (60), der im Gestellgehäuse (10) bereitgestellt ist und dazu konfiguriert ist, zu erfassen, ob in jedem der Batteriemodule (20) Gas erzeugt wird; und
eine Steuereinheit (50), die dazu konfiguriert ist, ein Steuersignal zu erzeugen, um, wenn vom Sensor (60) erfasst wird, dass in einem Batteriemodul (20) der Vielzahl von Batteriemodulen (20) Gas erzeugt wird, ein Feuerlöschmittel durch das Rohr (40) zu dem Batteriemodul (20) zu führen.

11. Batterie-Rack nach Anspruch 10, wobei das Feuerlöschmittel ein Halogenverbindungs-Feuerlöschmittel ist.

12. Energiespeichersystem, umfassend ein oder mehrere Batterie-Racks nach Anspruch 10.

## Revendications

1. Module de batterie comprenant :
un ensemble (100) de cellules comprenant des cellules (110) de batterie agencées de manière à se faire face dans une direction ;
un ensemble (200) de barres omnibus accouplé à une surface latérale de l'ensemble (100) de cellules sur lequel des fils d'électrode des cellules (110) de batterie sont situés ; et
des aubes (300) de guidage agencées devant l'ensemble (200) de barres omnibus dans une direction correspondant à une direction d'agencement des cellules (110) de batterie,
dans lequel chacune des aubes (300) de guidage présente une surface de plaque faisant face à au moins une cellule (110) de batterie, et est accouplée à l'ensemble (200) de barres omnibus pour, lorsque du gaz est généré dans au moins une cellule (110) de batterie, tourner d'un certain angle en raison de la pression de gaz,
dans lequel le module de batterie comprend en outre un boîtier (400) de module dans lequel l'ensemble (100) de cellules et l'ensemble (200) de barres omnibus sont reçus d'un seul tenant,
dans lequel le boîtier (400) de module comprend, d'un côté de celui-ci, une soupape (500) d'injection d'agent d'extinction d'incendie configurée pour injecter un agent d'extinction d'incendie dans le boîtier (400) de module,
dans lequel un espace vide (P) dans lequel l'agent d'extinction d'incendie est injecté est formé entre les aubes (300) de guidage et une paroi interne du boîtier (400) de module faisant face aux aubes (300) de guidage.

2. Module (20) de batterie selon la revendication 1 dans lequel une aube (300) de guidage est fournie par cellule (110) de batterie.

3. Module (20) de batterie selon la revendication 1, dans lequel chaque cellule (110) de batterie est une cellule de batterie de type poche avec une partie (113) de guidage d'évent de gaz sur un côté de celle-ci,
dans lequel chaque aube (300) de guidage est disposée au niveau d'une position faisant face à la partie (113) de guidage d'évent de gaz de chaque cellule (110) de batterie.

4. Module (20) de batterie selon la revendication 3, dans lequel chaque aube (300) de guidage comprend :
une partie (310) plaque de guidage fournie en tant que corps en forme de plaque capable de protéger une partie avant de la partie (113) de guidage d'évent de gaz ; et
une partie (320) arbre de charnière faisant saillie à partir d'une extrémité supérieure et d'une extrémité inférieure de la partie (310) plaque de guidage et insérée dans un trou d'insertion formé dans l'ensemble (200) de barres omnibus.

5. Module (20) de batterie selon la revendication 4, dans lequel chaque aube (300) de guidage est accouplée à l'ensemble (200) de barres omnibus de sorte que la partie (310) plaque de guidage soit normalement parallèle à la surface latérale de l'ensemble (100) de cellules.

6. Module (20) de batterie selon la revendication 4, dans lequel la partie (320) arbre de charnière comprend :
un arbre (321) passant verticalement à travers le trou d'insertion ; et
un loquet (322) faisant saillie horizontalement à partir d'une surface circonférentielle externe de l'arbre (321),
dans lequel l'ensemble (200) de barres omnibus comprend une butée (215) qui est fournie dans un rayon de rotation du loquet (322) pour entrer en contact avec le loquet (322) lorsque le loquet (322) tourne et est configurée pour limiter un angle de rotation du loquet (322).

7. Module (20) de batterie selon la revendication 6, dans lequel le loquet (322) comprend une partie convexe (323) présentant une forme d'arc sur une surface de celui-ci, et
la butée (215) comprend une partie concave (217) présentant une forme concave conforme à la partie convexe (323).

8. Module (20) de batterie selon la revendication 7, dans lequel au moins l'une de la partie convexe (323) et de la partie concave (217) est magnétique.

9. Module (20) de batterie selon la revendication 1, dans lequel l'ensemble (200) de barres omnibus comprend
un cadre (210) de barre omnibus comprenant : une partie (211) corps comprenant des fentes à travers lesquelles les fils d'électrode (111) passent et faisant face à la surface latérale de l'ensemble (100) de cellules ; une partie (212) plaque supérieure faisant saillie vers l'avant à partir d'une extrémité supérieure de la partie (211) corps ; et une partie (213) plaque inférieure faisant saillie vers l'avant à partir d'une extrémité inférieure de la partie (211) corps, et
une pluralité de barres omnibus (220) montées sur la partie (211) corps et connectées selon un motif prédéterminé aux fils d'électrode (111),
dans lequel une extrémité supérieure et une extrémité inférieure de chaque aube (300) de guidage sont respectivement articulées à la partie (212) plaque supérieure et à la partie (213) plaque inférieure.

10. Bâti de batterie comprenant :
un logement (10) de bâti ;
une pluralité de modules (20) de batterie selon l'une quelconque des revendications 1 à 9 agencés en couches dans le logement (10) de bâti ;
un réservoir (30) d'agent d'extinction d'incendie situé à l'intérieur du logement (10) de bâti ou autour du logement (10) de bâti ;
un tuyau (40) reliant le réservoir (30) d'agent d'extinction d'incendie à chacun de la pluralité de modules (20) de batterie ;
au moins un capteur (60) fourni dans le logement (10) de bâti et configuré pour détecter si oui ou non du gaz est généré dans chacun des modules (20) de batterie ; et
un dispositif de commande (50) configuré pour générer un signal de commande pour, lorsqu'il est détecté par le capteur (60) que du gaz est généré dans un module (20) de batterie de la pluralité de modules (20) de batterie, guider un agent d'extinction d'incendie vers le module (20) de batterie à travers le tuyau (40).

11. Bâti de batterie selon la revendication 10, dans lequel l'agent d'extinction d'incendie est un agent d'extinction d'incendie de composé halogène.

12. Système de stockage d'énergie comprenant un ou plusieurs bâtis de batterie selon la revendication 10.
